# EUROPEAN PATENT SPECIFICATION

(11) **EP 4 236 578 B1**
(45) Date of publication and mention of the grant of the patent: **25.11.2026**
(21) Application number: 23169761.6
(22) Date of filing: 16.12.2014
(51) Int. Cl.: H04L 5/00, H04L 5/14, H04W 74/0816, H04L 27/26, H04W 84/12

(54) **SYSTEM AND METHOD FOR WLAN OFDMA DESIGN OF UPLINK TRANSMISSIONS**
SYSTEM UND VERFAHREN FÜR WLAN-OFDMA-ENTWURF FÜR UPLINK-ÜBERTRAGUNGEN
SYSTÈME ET PROCÉDÉ DE CONCEPTION OFDMA WLAN DE TRANSMISSIONS EN LIAISON MONTANTE

(30) Priority: 18.12.2013 US 201361917791 P; 24.07.2014 US 201414340058
(43) Date of publication of application: 30.08.2023
(62) Document number(s) of the earlier application(s) in accordance with Art. 76 EPC: 21205034.8 / 3 972 184; 14870891.0 / 3 017 614
(73) Proprietor: Huawei Technologies Co., Ltd., Shenzhen, Guangdong 518129 (CN)
(72) Inventor: ABOUL-MAGD, Osama, Kanata, Ontario K2M 2K2 (CA); AU, Kwok Shum, Shenzhen, Guangdong 518129 (CN); SUH, Jung Hoon, Kanata, Ontario K2W 0A8 (CA)
(74) Representative: Epping - Hermann - Fischer

(56) References cited:
- US-A1- 2012 327 915
- JUNWOO JUNG ET AL: "Group Contention-Based OFDMA MAC Protocol for Multiple Access Interference-Free in WLAN Systems", IEEE TRANSACTIONS ON WIRELESS COMMUNICATIONS, IEEE SERVICE CENTER, PISCATAWAY, NJ, US, vol. 11, no. 2, 1 February 2012 (2012-02-01), pages 648 - 658, XP011414999, ISSN: 1536-1276, DOI: 10.1109/TWC.2011.122211.102316
- HASAN SHAHID FERDOUS ET AL: "Enhanced IEEE 802.11 by integrating multiuser dynamic OFDMA", WIRELESS TELECOMMUNICATIONS SYMPOSIUM (WTS), 2010, IEEE, PISCATAWAY, NJ, USA, 21 April 2010 (2010-04-21), pages 1 - 6, XP031686251, ISBN: 978-1-4244-6558-3
- GEBRESELASSIE HAILE ET AL: "C-OFDMA: Improved Throughput for Next Generation WLAN Systems Based on OFDMA and CSMA/CA", INTELLIGENT SYSTEMS MODELLING&SIMULATION (ISMS), 2013 4TH INTERNATIONAL CONFERENCE ON, IEEE, 29 January 2013 (2013-01-29), pages 497 - 502, XP032364326, ISBN: 978-1-4673-5653-4, DOI: 10.1109/ISMS.2013.121

## Description

### TECHNICAL FIELD

The present invention relates to network communications, and, in particular embodiments, to methods for WLAN OFDMA design of uplink and downlink transmissions, and a corresponding access point and station.

### BACKGROUND

Wireless Local Area Networks (WLANs) commonly operate in unlicensed spectrum bands. Rules for operation in these bands force competing devices to share the available resources and defer their intended transmissions when the medium is sensed busy. The medium refers to the transmission channel or bandwidth shared by multiple components of the WLAN to transmit uplink and downlink signals. The bandwidth (or frequency range) is shared for uplink and downlink transmissions. Typically, a WLAN uses an Orthogonal Frequency-Division Multiplexing (OFDM) transmission format in which all transmission resources are assigned to a single device. Random assignment is commonly achieved using carrier sense multiple access with collision avoidance (CSMA/CA). With CSMA/CA a device wins access to the medium, transmits its data up to a pre-defined period of time, and then gives up the medium for other devices to compete for transmission. In contrast, Orthogonal Frequency Division Multiple Access (OFDMA) is a transmission and access mechanism that accommodates multiple-user transmissions simultaneously. OFDMA is commonly implemented in wireless infrastructures operating in the licensed bands in order to meet timing information in terms of frame structure and the scheduling of resources among a subset of users. There is a need for efficient schemes for implementing OFDMA in WLANs.

JUNWOO JUNG ET AL: "Group Contention-Based OFDMA MAC Protocol for Multiple Access Interference-Free in WLAN Systems, IEEE TRANSACTIONS ON WIRELESS COMMUNICATIONS, vol. 11, no. 2 (2012-02-01), pages 648-658" briefly discussed multiple access interference (MAI) in WLAN systems. To solve this MAI problem, this paper proposed a group contention-based OFDMA to solve the MAI problem with an adequate cyclic prefix length and support a larger number of STAs. The STAs within the cyclic prefix duration that are synchronized to an access point (AP), are included in the same contending group and compete with other STAs of the group in transmitting packets. The proposed scheme achieves higher throughput than 802.11 protocols and a conventional CSMA combined with OFDMA.

HASAN SHAHID FERDOUS ET AL: "Enhanced IEEE 802.11 by integrating multiuser dynamic OFDMA", WIRELESS TELECOMMUNICATIONS SYMPOSIUM (WTS), 2010, IEEE, PISCATAWAY, NJ, USA, ISBN: 978-1-4244-6558-3 discusses the problems associated with the present contention resolution mechanism of IEEE 802.11 DCF and presents a new approach to improve it. The proposed MAC, using OFDMA in the physical layer, can incorporate multiple concurrent transmissions or receptions in a dynamic manner and can adjust the collision probability based on the traffic load when nodes are endowed with a single half-duplex radio only. Simulation results show that the system improves throughput by up to 40 percent, reduces collision in control messages by up to 80 percent and reduces the average delay for data transmission by up to 20 percent.

### SUMMARY OF THE INVENTION

The present invention discloses in particular methods for WLAN OFDMA design of uplink and downlink transmissions, and a corresponding access point and station, as defined in the independent claims.
The invention is defined in the claims. In the following, parts of the description and drawings referring to embodiments which are not covered by the claims are not presented as embodiments of the invention, but as examples useful for understanding the invention.

The foregoing has outlined rather broadly the features of an aspect of the present invention in order that the detailed description of the invention that follows may be better understood. Additional features and advantages of aspects of the invention will be described hereinafter, which form the subject of the claims of the invention. It should be appreciated by those skilled in the art that the specific aspects disclosed may be readily utilized as a basis for modifying or designing other structures or processes for carrying out the same purposes of the present invention. It should also be realized by those skilled in the art that such equivalent constructions do not depart from the scope of the invention as set forth in the appended claims.

### BRIEF DESCRIPTION OF THE DRAWINGS

For a more complete understanding of the present invention, and the advantages thereof, reference is now made to the following descriptions taken in conjunction with the accompanying drawing, in which:
Figure 1 illustrates a WLAN basic service set (BSS);
Figure 2 illustrates embodiment of events during a downlink (DL) OFDMA TXOP;
Figure 3 illustrates a Block Acknowledgement Request (BAR) frame format;
Figure 4 illustrates a BAR control field format;
Figure 5 illustrates embodiment of events during an uplink (UL) OFDMA TXOP;
Figure 6 illustrates an embodiment of UL OFDMA transmissions;
Figure 7 illustrates an embodiment method of AP and STAs operations during the DL OFDMA TXOP;
Figure 8 illustrates an embodiment method of AP and STAs operations during the UL OFDMA TXOP; and
Figure 9 is a diagram of a processing system that can be used to implement various embodiments.

Corresponding numerals and symbols in the different figures generally refer to corresponding parts unless otherwise indicated. The figures are drawn to clearly illustrate the relevant aspects of the embodiments and are not necessarily drawn to scale.

### DETAILED DESCRIPTION OF ILLUSTRATIVE EMBODIMENTS

The making and using of the presently preferred embodiments are discussed in detail below. It should be appreciated, however, that the present can be embodied in a wide variety of specific contexts. The specific embodiments discussed are merely illustrative of specific ways to make and use the invention, and do not limit the scope of the invention.

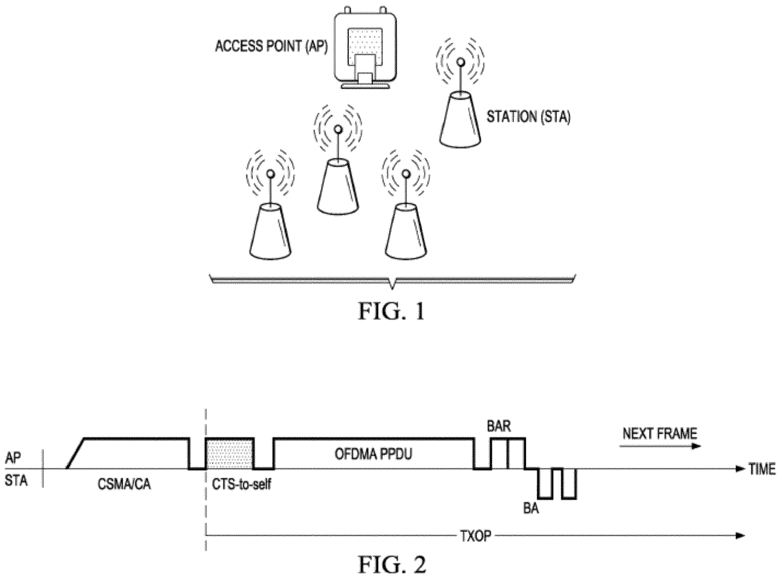

Disclosed herein are system and method embodiments for WLAN OFDMA operations in uplink and downlink transmissions. Figure 1 shows an example of a WLAN basic service set (BSS) including an access point (AP) and one or more stations (STAs). The AP is a communication device that allows the STAs to access and communicate with the WLAN. The STAs are any user communication devices allowing users or subscribers to communicate with the AP and hence the WLAN. Examples of STAs include smartphones, tablet computers, laptop computers, desktop computers, sensor devices (e.g., smartwatch), and other mobile or communication devices with WLAN (e.g., WiFi) capability.

The STAs and the AP compete for access to a shared medium, e.g., shared wireless channel bandwidth, symbols, or subcarriers. Access to the medium may be based on random access mechanisms such as carrier sense multiple access with collision avoidance (CSMA/CA) or using a scheduling mechanism that allows the STAs and AP access to the medium at specified or predetermined times. Irrespective of how access to the medium is obtained, a downlink (DL) OFDMA transmission opportunity (TXOP) is obtained when the AP has the right to access the medium and communicates with multiple STAs in a single OFDMA transmission. An uplink (UL) OFDMA TXOP is obtained when a STA gains access to the medium and is ready to start an UL OFDMA TXOP by inviting other STAs to share the available transmission resources, e.g. the subcarriers.

In general, an OFDMA system consists of an integer N_{sc} of subcarriers defined in a channel of certain bandwidth, W Megahertz (MHz). For example in WLAN, the bandwidth W is usually set to 20 MHz. The subcarrier separation Δf is given by Δf = W/N_{sc}. The OFDMA symbol duration Tₛ is given by 1/Δf. The quantity N_{sc} is set at 64 in WLAN OFDM implementation. With the introduction of OFDMA to WLAN, N_{sc} may be set to a higher value, such as 256 or 512 to achieve finer granularity. During each OFDMA transmission (uplink or downlink), a number of subcarriers are allocated to each of the users participating in the transmission.

Figure 2 shows a sequence of events during a DL OFDMA TXOP according to an embodiment of the disclosure. Using CSMA/CA, a DL OFDMA TXOP starts when the AP gains access to the medium. The first action that the AP performs is to protect the medium. The protection of the medium can be performed by a signaling mechanism to request protection of the medium form access bother entities. In an embodiment, the signaling mechanism is sending a clear-to-send (CTS). As such, a CTS frame is sent by the AP using a non-High Throughput (non-HT) format and comprises a time value in a Legacy Signal Field (L-SIG) in the CTS frame for the legacy STAs, or in a Duration/ID field of the CTS frame for non-OFDMA STAs (e.g., high throughput (HT) and very high throughput (VHT) STAs). The time value allows all STAs to defer their transmissions by an amount of time. In various embodiments, the CTS sent by the AP does not require a reply back to the AP from other entities (STAs) receiving this CTS.

Alternatively, the AP can protect the medium by sending a request-to-send (RTS) message to one of its associated STAs. The STA then responds with a CTS message back to the AP. The RTS and CTS messages are sent using non-HT format. The AP then generates an OFDMA physical layer (PHY) Protocol Data Unit (PPDU) that includes frames destined to a number of STAs. For instance, the recipient STAs can be identified by a group ID (GrpID) in the OFDMA SIG field. The OFDMA resource allocation portion in the SIG field may be determined by any previous suitable packet transmission from the AP to the STAs, instead of using any separate channel sounding for the channel response information per each STA. For example, packets that were used for the contention to access the medium by each STA can also be used to get the channel response of each STA and to determine OFDMA resource allocation portion in the SIG field.

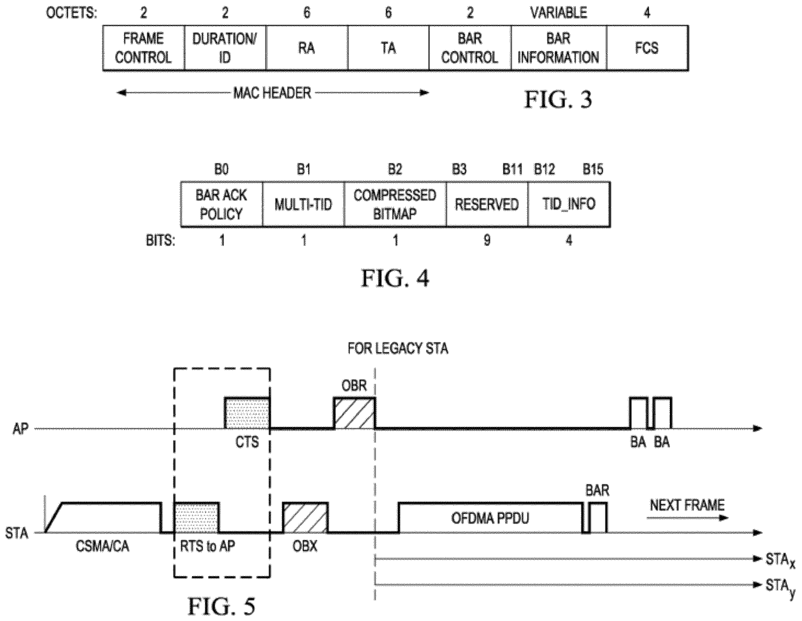

When the transmission of the OFDMA PPDU is finished, the AP requests acknowledgements from those STAs participating in the OFDMA transmission. Specifically, the AP sends Block Acknowledgement Request (BAR) frames using OFDMA, one frame for each of the participating STAs. Each STA responds with a Block ACK (BA) frame according to one of the following scenarios. If UL OFDMA is supported, then the participating STAs use OFDMA to send their BAs in the uplink direction. In this case, timing information for synchronizing the uplink transmissions needs to be propagated from the AP to the STAs. The timing information may be included in the BAR frame by extending the BAR information field. Figure 3 shows a BAR frame format. The BAR information field in the frame is of variable length and suitable for adding timing information at the start or at the end of the field.

Alternatively, if UL OFDMA is not supported, then the participating STAs need to send their BA frames in sequence. One way to determine the sequence for sending the BA frames is for the AP to transmit the BAR frames one after the other using non-HT format (e.g., without using OFDMA format). However, this approach produces some overhead. Instead, the AP can send an explicit sequence using some of the reserved bits in the BAR control field in the BAR frame. Figure 4 shows a BAR control field format. The number of bits needed to indicate the sequence depends on the maximum number of STAs that are allowed to participate in the OFDMA transmission. For example, in the case of 4 STAs, 2 bits are needed for the AP to communicate to the STAs the expected sequence of BA frames.

Figure 5 shows a sequence of events during an UL OFDMA TXOP according to an embodiment of the disclosure. The UL OFDMA TXOP starts when an OFDMA-capable STA (non-AP STA) acquires the medium. Similar to the DL OFDMA TXOP, the first action of the STA is to protect the medium by a signaling mechanism. The signaling mechanism requests protection of the medium from access by the AP. The signaling comprises sending an RTS frame to the AP and wait for the CTS response. The STAs defer their transmissions based on information included in the RTS/CTS frames.

The STA then sends an OFDMA Begin Transmission (OBX) frame to the AP. The reception of the OBX frame by the AP is an indication that the STA wishes to start an UL OFDMA TXOP by sharing the medium with other STAs. The AP selects other STAs to participate in the UL OFDMA, e.g., STAx and STAy in Figure 5, based on knowledge available at the AP on traffic requirements and frame availability. The AP then responds with an OFDMA Begin Receive (OBR) frame to participating STAs. According to the invention, in addition to the identities of stations participating in the UL TXOP, the OBR frame includes the maximum PPDU length that STAs must adhere to. The OBR frame acts as a trigger to start the UL transmissions by participating stations. Each STA may compensate the timing offset and carrier frequency offset using Legacy STFs and LTFs appended in the OBR frame. Before the participating STAs, e.g., STAx and STAy in Figure 5, transmit the UL frame, OFDMA PPDU, a time delay is needed after the OBR reception to allow enough processing time for each participating STA to switch from receiving mode to transmitting mode. For instance, each STA waits at least a 30 microseconds to establish an Inter Frame Spacing between the OBR reception and the OFDMA PPDU transmission. The Inter Frame Spacing avoids transient frequency agitation which can occur during the STA switching from the receiving mode to transmitting mode.

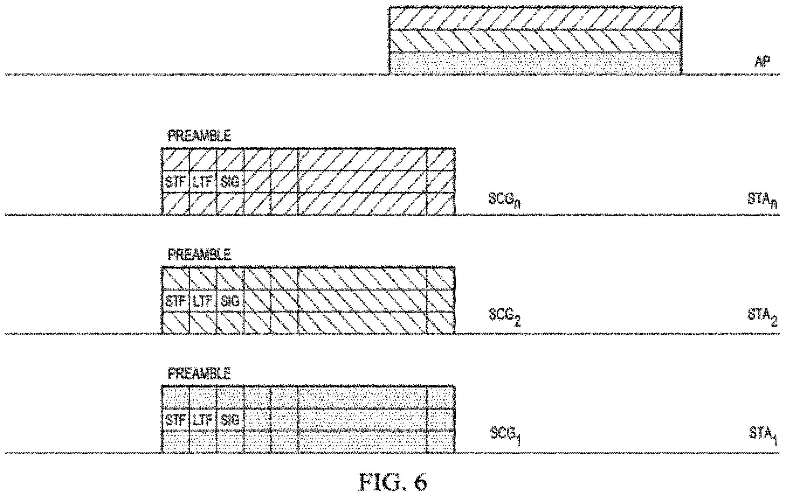

Figure 6 shows UL OFDMA transmissions according to an embodiment of the disclosure. After performing the synchronization during the OBX/OBR exchange of the UL OFDMA TXOP, the STAs start their OFDMA transmissions of PPDUs, as described above. The participating STAs transmit their corresponding PPDUs simultaneously on the uplink to the AP using their allocated subcarriers. After the successful transmission of the PPDUs by participating STAs, the AP can send BA frames after receiving BAR frames transmitted by the participating STAs using OFDMA format. The BA frames may be sent by the AP using the OFDMA format or can be sent sequentially as shown in Figure 5.

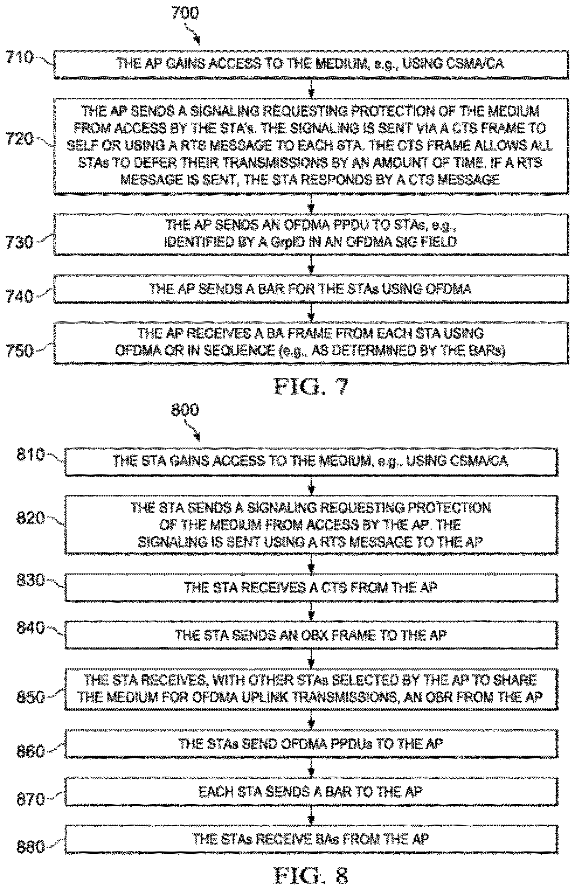

Figure 7 shows an embodiment method 700 of AP operations during a DL OFDMA TXOP. At step 710, the AP gains access to the medium, e.g., using CSMA/CA. At step 720, the AP sends a signaling requesting protection of the medium from access by the STAs. The signaling is sent using a CTS frame or using a RTS message to each STA. The CTS frame allows all STAs to defer their transmissions by an amount of time. In various embodiments, the CTS sent by the AP does not require a reply back to the AP from other entities (STAs) receiving this CTS. If a RTS message is sent, the STA responds by a CTS message back to the AP. At step 730, the AP sends an OFDMA PPDU to STAs, e.g., identified by a GrpID in an OFDMA SIG field. At step 740, the AP sends a BAR for the STAs using OFDMA. At step 750, the AP receives a BA frame from each STA using OFDMA or in sequence (e.g., as determined by the BARs).

Figure 8 shows an embodiment method of STAs operations during an UL OFDMA TXOP. At step 810, the STA gains access to the medium, e.g., using CSMA/CA. At step 820, the STA sends a signaling requesting protection of the medium from access by the AP. The signaling is sent using a RTS message to the AP. At step 830, the STA receives a CTS from the AP. At step 840, the STA sends an OBX frame to the AP. At step 850, the STA receives, with other STAs selected by the AP to share the medium for OFDMA uplink transmissions, an OBR from the AP. At step 860, the STAs send OFDMA PPDUs to the AP. At step 870, each STA sends a BAR to the AP. At step 880, the STAs receive BAs from the AP.

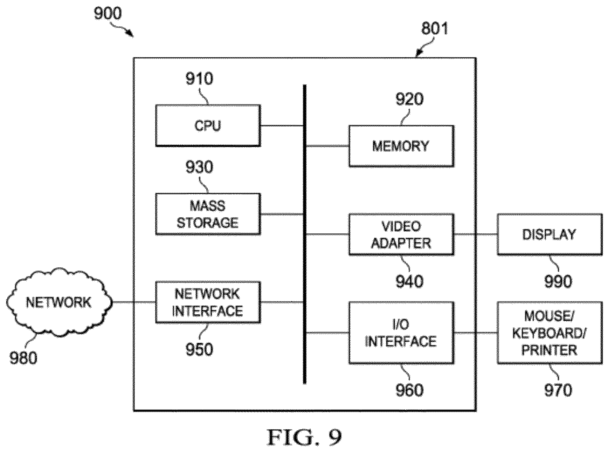

Figure 9 is a block diagram of a processing system 900 that can be used to implement various embodiments. For instance the processing system 900 can be part of a AP, a STA, or a controller in a WLAN. Specific devices may utilize all of the components shown, or only a subset of the components, and levels of integration may vary from device to device. Furthermore, a device may contain multiple instances of a component, such as multiple processing units, processors, memories, transmitters, receivers, etc. The processing system 900 may comprise a processing unit 901 equipped with one or more input/output devices, such as a speaker, microphone, mouse, touchscreen, keypad, keyboard, printer, display, and the like. The processing unit 901 may include a central processing unit (CPU) 910, a memory 920, a mass storage device 930, a video adapter 940, and an I/O interface 960 connected to a bus. The bus may be one or more of any type of several bus architectures including a memory bus or memory controller, a peripheral bus, a video bus, or the like.

The CPU 910 may comprise any type of electronic data processor. The memory 920 may comprise any type of system memory such as static random access memory (SRAM), dynamic random access memory (DRAM), synchronous DRAM (SDRAM), read-only memory (ROM), a combination thereof, or the like. In an embodiment, the memory 920 may include ROM for use at boot-up, and DRAM for program and data storage for use while executing programs. In embodiments, the memory 920 is non-transitory. The mass storage device 930 may comprise any type of storage device configured to store data, programs, and other information and to make the data, programs, and other information accessible via the bus. The mass storage device 930 may comprise, for example, one or more of a solid state drive, hard disk drive, a magnetic disk drive, an optical disk drive, or the like.

The video adapter 940 and the I/O interface 960 provide interfaces to couple external input and output devices to the processing unit. As illustrated, examples of input and output devices include a display 990 coupled to the video adapter 940 and any combination of mouse/keyboard/printer 970 coupled to the I/O interface 960. Other devices may be coupled to the processing unit 901, and additional or fewer interface cards may be utilized. For example, a serial interface card (not shown) may be used to provide a serial interface for a printer.

The processing unit 901 also includes one or more network interfaces 950, which may comprise wired links, such as an Ethernet cable or the like, or wireless links to access nodes or one or more networks 980. The network interface 950 allows the processing unit 901 to communicate with remote units via the networks 980. For example, the network interface 950 may provide wireless communication via one or more transmitters/transmit antennas and one or more receivers/receive antennas. In an embodiment, the processing unit 901 is coupled to a local-area network or a wide-area network for data processing and communications with remote devices, such as other processing units, the Internet, remote storage facilities, or the like.

While several embodiments have been provided in the present disclosure, it should be understood that the disclosed systems and methods might be embodied in many other specific forms without departing from the scope of the claims. The present examples are to be considered as illustrative and not restrictive, and the intention is not to be limited to the details given herein. For example, the various elements or components may be combined or integrated in another system or certain features may be omitted, or not implemented.

In addition, techniques, systems, subsystems, and methods described and illustrated in the various embodiments as discrete or separate may be combined or integrated with other systems, modules, techniques, or methods. Other items shown or discussed as coupled or directly coupled or communicating with each other may be indirectly coupled or communicating through some interface, device, or intermediate component whether electrically, mechanically, or otherwise.

The invention is defined by the appended claims.

## Claims

1. A method by an access point, AP, for Orthogonal Frequency Division Multiple Access, OFDMA, uplink transmission in a Wireless Local Area Network, WLAN, the method comprising the following successive steps: receiving, from a station, STA, a frame indicating that the STA wishes to start an uplink OFDMA transmission; sending an OFDMA Begin Receive, OBR, frame, wherein the OBR frame is sent by the AP to a plurality of STAs participating to the uplink OFDMA transmission and the OBR frame acts as a trigger to start the uplink OFDMA transmission by the plurality of STAs,, wherein the OBR frame includes identities of the participating STAs, subcarriers allocation to the participating STAs, and a maximum, physical layer Protocol Data Unit, PPDU length that the plurality of STAs must adhere to;
receiving (860), from the STA, an OFDMA PPDU from the STA.

2. A method by a station, STA, for Orthogonal Frequency Division Multiple Access, OFDMA, uplink transmissions in a Wireless Local Area Network, WLAN, the method comprising the following successive steps: sending, to an access point, AP, a frame indicating that the STA wishes to start an uplink OFDMA transmission; receiving, from the AP, an OFDMA Begin Receive, OBR, frame, wherein the OBR frame is sent by the AP to a plurality of STAs participating to the uplink OFDMA transmission and the OBR frame acts as a trigger to start the uplink OFDMA transmission by the plurality of STAs, wherein the OBR frame includes identities of the participating STAs, subcarriers allocation to the participating STAs, and a maximum, physical layer Protocol Data Unit, PPDU length that the plurality of STAs must adhere to;
sending, to the AP, an OFDMA PPDU.

3. The method of claim 2 further comprising:
gaining access to the transmission channel before sending signaling requesting protection of a transmission channel for uplink transmission from access by the AP.

4. An access point, AP, supporting Orthogonal Frequency Division Multiple Access, OFDMA, transmission in a Wireless Local Area Network, WLAN, the AP comprising:
a processor; and
a computer readable storage medium storing programming for execution by the processor, the programming including instructions which, when the programming is executed by a computer, cause the computer to carry out the method of claim 1.

5. A station, STA, supporting Orthogonal Frequency Division Multiple Access, OFDMA, transmission in a Wireless Local Area Network, WLAN, the STA comprising:
a processor; and
a computer readable storage medium storing programming for execution by the processor, the programming including instructions which, when the programming is executed by a computer, cause the computer to carry out the method of of claim 2 or 3.

## Patentansprüche

1. Verfahren durch einen Zugangspunkt (AP) für eine Uplink-Übertragung mit Mehrfachzugang durch orthogonale Frequenzteilung (OFDMA) in einem drahtlosen lokalen Netzwerk (WLAN), wobei das Verfahren die folgenden aufeinanderfolgenden Schritte umfasst:
Empfangen, von einer Station (STA), eines Rahmens, der angibt, dass die STA eine Uplink-OFDMA-Übertragung starten möchte;
Senden eines OFDMA-Empfangsbeginn(OBR)-Rahmens, wobei der OBR-Rahmen durch den AP an eine Vielzahl von STAs gesendet wird, die an der Uplink-OFDMA-Übertragung teilnehmen, und der OBR-Rahmen als ein Auslöser wirkt, um die OFDMA-Übertragung durch die Vielzahl von STAs zu starten, wobei der OBR-Rahmen Identitäten der teilnehmenden STAs, eine Subträgerzuweisung an die teilnehmenden STAs und eine maximal Länge der Protokolldateneinheit der physikalischen Schicht (PPDU) einschließt, die die STAs einhalten müssen;
Empfangen (860), von der STA, einer OFDMA-PPDU von der STA.

2. Verfahren durch eine Station (STA) für Uplink-Übertragungen mit Mehrfachzugang durch orthogonale Frequenzteilung (OFDMA) in einem drahtlosen lokalen Netzwerk (WLAN), wobei das Verfahren die folgenden aufeinanderfolgenden Schritte umfasst:
Senden, an einen Zugangspunkt (AP), eines Rahmens, der angibt, dass die STA eine Uplink-OFDMA-Übertragung starten möchte;
Empfangen, von dem AP, eines OFDMA-Empfangsbeginn(OBR)-Rahmens, wobei der OBR-Rahmen durch den AP an eine Vielzahl von STAs gesendet wird, die an der Uplink-OFDMA-Übertragung teilnehmen, und der OBR-Rahmen als ein Auslöser wirkt, um die OFDMA-Übertragung durch die Vielzahl von STAs zu starten, wobei der OBR-Rahmen Identitäten der teilnehmenden STAs, eine Subträgerzuweisung an die teilnehmenden STAs und eine maximal Länge der Protokolldateneinheit der physikalischen Schicht (PPDU) einschließt, die die STAs einhalten müssen;
Senden, an den AP; einer OFDMA-PPDU.

3. Verfahren nach Anspruch 2, das ferner umfasst:
Erlangen von Zugang zu dem Übertragungskanal vor dem Senden einer Signalisierung, die Schutz eines Übertragungskanals für eine Uplink-Übertragung von dem Zugang durch den AP anfordert.

4. Zugangspunkt (AP), der die Übertragung mit Mehrfachzugang durch orthogonale Frequenzteilung (OFDMA) in einem drahtlosen lokalen Netzwerk (WLAN) unterstützt, wobei der AP umfasst:
einen Prozessor; und
ein computerlesbares Speichermedium, das Programmierung für die Ausführung durch den Prozessor speichert, wobei die Programmierung Anweisungen einschließt, die, wenn die Programmierung durch einen Computer ausgeführt wird, den Computer veranlassen, das Verfahren nach Anspruch 1 vorzunehmen.

5. Station (STA), die die Übertragung mit Mehrfachzugang durch orthogonale Frequenzteilung (OFDMA) in einem drahtlosen lokalen Netzwerk (WLAN) unterstützt, wobei die STA umfasst:
einen Prozessor; und
ein computerlesbares Speichermedium, das Programmierung für die Ausführung durch den Prozessor speichert, wobei die Programmierung Anweisungen einschließt, die, wenn die Programmierung durch einen Computer ausgeführt wird, den Computer veranlassen, das Verfahren nach Anspruch 2 oder 3 vorzunehmen.

## Revendications

1. Procédé par un point d'accès, AP, pour une transmission de liaison montante à accès multiple par répartition orthogonale de fréquence, OFDMA, dans un réseau local sans fil, WLAN, le procédé comprenant les étapes successives suivantes :
la réception, à partir d'une station, STA, d'une trame indiquant que la STA souhaite démarrer une transmission OFDMA de liaison montante ;
l'envoi d'une trame de début de réception OFDMA, OBR, dans lequel la trame OBR est envoyée par l'AP à une pluralité de STA participant à la transmission OFDMA de liaison montante et la trame OBR agit comme déclencheur pour démarrer la transmission OFDMA de liaison montante par la pluralité de STA, dans lequel la trame OBR comporte des identités des STA participantes, une attribution de sous-porteuses aux STA participantes et une longueur d'unité de données de protocole de couche physique, PPDU, maximale à laquelle la pluralité de STA doit adhérer ;
la réception (860), à partir de la STA, d'une PPDU OFDMA à partir de la STA.

2. Procédé par une station, STA, pour des transmissions de liaison montante à accès multiple par répartition orthogonale de fréquence, OFDMA, dans un réseau local sans fil, WLAN, le procédé comprenant les étapes successives suivantes :
l'envoi, à un point d'accès, AP, d'une trame indiquant que la STA souhaite démarrer une transmission OFDMA de liaison montante ;
la réception, à partir de l'AP, d'une trame de début de réception OFDMA, OBR, dans lequel la trame OBR est envoyée par l'AP à une pluralité de STA participant à la transmission OFDMA de liaison montante et la trame OBR agit comme déclencheur pour démarrer la transmission OFDMA de liaison montante par la pluralité de STA,
dans lequel la trame OBR comporte des identités des STA participantes, une attribution de sous-porteuses aux STA participantes et une longueur d'unité de données de protocole de couche physique, PPDU, maximale à laquelle la pluralité de STA doit adhérer ;
l'envoi, à l'AP, d'une PPDU OFDMA.

3. Procédé selon la revendication 2, comprenant en outre :
l'obtention d'un accès au canal de transmission avant l'envoi d'une signalisation demandant une protection d'un canal de transmission pour une transmission de liaison montante contre tout accès par l'AP.

4. Point d'accès, AP, prenant en charge une transmission à accès multiple par répartition orthogonale de fréquence, OFDMA, dans un réseau local sans fil, WLAN, l'AP comprenant :
un processeur ; et
un support de stockage lisible par ordinateur stockant une programmation destinée à être exécutée par le processeur, la programmation comportant des instructions qui, lorsque la programmation est exécutée par un ordinateur, amènent l'ordinateur à mettre en œuvre le procédé selon la revendication 1.

5. Station, STA, prenant en charge une transmission à accès multiple par répartition orthogonale de fréquence, OFDMA, dans un réseau local sans fil, WLAN, la STA comprenant :
un processeur ; et
un support de stockage lisible par ordinateur stockant une programmation destinée à être exécutée par le processeur, la programmation comportant des instructions qui, lorsque la programmation est exécutée par un ordinateur, amènent l'ordinateur à mettre en œuvre le procédé selon la revendication 2 ou 3.
